# EUROPEAN PATENT APPLICATION

(11) **EP 4 717 491 A1**
(43) Date of publication of application: **01.04.2026**
(21) Application number: 24215345.0
(22) Date of filing: 26.11.2024
(51) Int. Cl.: B60K 28/06, B60W 40/08, B60W 40/09, B60W 50/08, B60W 50/12, B60W 50/14

(54) **REAL-TIME VEHICLE CONTROLLING SYSTEM AND METHOD THEREOF**

(30) Priority: 27.09.2024 IN 202411073029
(71) Applicant: Novus Hi-Tech Robotic Systemz Private Ltd., 122001 Gurgaon , Haryana (IN)
(72) Inventor: Mehta, Sharad, 122001 Haryana (IN); Kaushik, Aman, 122001 Haryana (IN); Agrahari, Ayushman, 122001 Haryana (IN); Singh, Lovepreet, 122001 Haryana (IN); Yadav, Ravi, 122001 Haryana (IN); Kapuria, Anuj, 122001 Haryana (IN)
(74) Representative: Hafner & Kohl PartmbB

(57) **Abstract**

The present disclosure provides a vehicle controlling system and method thereof. The system 100 and method 300 include a driver identification unit 101, an alcohol detection unit 102, a control unit 104, a storage unit 112, and a driver monitoring unit (DMU) 106 to perform many tasks. The driver identification unit 101 identifies an authorized driver. The alcohol detection unit 102 measures an alcohol content in a driver's sample. The DMU 106 monitors a driver profile in a real-time. Further, the control unit 104 is operably configured to allow a vehicle to start if the measured alcohol content is within a predefined threshold limit, assess a plurality of drive profile information received from the storage unit 112, the alcohol detection unit 102, and the DMU 106, and adjust dynamically the predefined threshold limit of the alcohol content required to crank the vehicle based on the assessment, when an unsafe driving pattern is detected.

## Description

### TECHNICAL FIELD

The present application relates to the technical field of vehicles, and more specifically relates to a vehicle controlling system in real-time and method thereof.

### BACKGROUND

The increasing prevalence of alcohol-related accidents has become a significant concern for road safety worldwide. According to various traffic safety reports, a substantial percentage of road accidents involve drivers who are under the influence of alcohol. These incidents not only pose a threat to the safety of the drivers themselves but also endanger passengers, pedestrians, and other road users. As a result, there has been a growing need for innovative solutions to prevent and reduce the occurrence of such incidents.

Traditional methods for detecting and preventing drunk driving primarily involve law enforcement and roadside checks. However, these methods have limitations in terms of coverage, frequency, and the ability to prevent intoxicated individuals from starting their vehicles in the first place. This gap has led to the exploration of technological solutions that can offer continuous and real-time monitoring of drivers' sobriety and driving behavior.

Existing in-vehicle alcohol detection systems, such as ignition interlock devices, have been employed to prevent drivers from operating vehicles when their blood alcohol content exceeds a certain limit. While effective to some extent, these systems are often rigid and do not account for the dynamic nature of driving conditions and individual driver behavior.

For instance, JP Patent JP2009020683A relates to a drunk driving prevention apparatus which comprises an ECU for controlling an actuation unit, in which an ignition sensor and a drinking detection sensor are connected to the ECU. Further, the ECU comprises a breathalyzing unit, a route history acquiring unit, a threshold value setting unit, and a threshold value table. The route history acquiring unit downloads route history from a storing unit of a mobile terminal, and the threshold value setting unit determines drinking possibility of the driver based on the route history. Then the threshold value setting unit sets a threshold value for determining drinking at the breathalyzing unit based on the determination result of the drinking possibility.

WO2017061653A1 discloses a vehicle auxiliary device that includes a sensor for measuring an alcohol concentration; and a processor for controlling a vehicle by performing drunk driving validation on the basis of an alcohol concentration sensed through the sensor, wherein the processor performs a first drunk driving validation according to the alcohol concentration sensed through the sensor before starting the vehicle, and further performs a second drunk driving validation according to an alcohol concentration sensed through the sensor during running of the vehicle.

The above-cited prior arts disclosed the driver's behaviour profiling and updating the threshold level of alcohol content to start the vehicle based on the user's drinking history. But they lack the integration of driver monitoring technologies with vehicle controlling technologies that can provide a more comprehensive assessment of a driver's fitness to operate a vehicle safely and adjust the alcohol content threshold to maintain effectiveness in preventing drunk driving.

None of the aforementioned arts addressed the crucial aspect of adjusting/reducing an alcohol content threshold to crank the vehicle when the user is attempting to escape the alcohol detection by repeatedly consuming the amounts of alcohol just below the threshold level.

The present invention addresses the aforementioned issues and aims to develop a real-time vehicle controlling system that not only measures the alcohol content in a driver's breath but also monitors the driver's behavior and adjusts the vehicle's operation parameters accordingly, which significantly reduces the incidence of alcohol-related road accidents and enhance overall vehicular safety.

### OBJECTIVES OF THE DISCLOSURE

A primary objective of the present disclosure is to provide a system and a method implement a breath analyzer within the vehicle to measure the driver's alcohol content in real-time and continuous monitoring of the driver's condition to control a parameter for vehicle operation to improve the road safety.

Another objective of the present disclosure is to provide the system that is designed to dynamically adjust the predefined threshold limit for alcohol content based on real-time assessments of the driver's current and historical driving patterns.

Another objective of the present disclosure is to provide the system to provide a warning alert when unsafe driving patterns are detected, thereby promoting safer driving behavior even after the vehicle has been cranked.

Yet another objective of the present invention is to provide the system in which driver's specific historical data is used in conjunction with real-time monitoring to provide a more accurate assessment of the driver's ability to operate the vehicle safely.

### SUMMARY OF THE DISCLOSURE

The following is a summary description of illustrative embodiments of the invention. It is provided as a preface to assist those skilled in the art to more rapidly assimilate the detailed design discussion which ensues and is not intended in any way to limit the scope of the claims which are appended hereto in order to particularly point out the invention.

An embodiment of the present invention relates to a real-time vehicle controlling system and a method thereof. The system includes a driver identification unit, an alcohol detection unit, a driver monitoring unit (DMU), a storage unit, and a control unit to perform one or more functions to control a vehicle.

In accordance with an embodiment of the present invention, the driver identification unit is configured to identify an authorized driver. Further, the alcohol detection unit is configured to measure an alcohol content in a sample of the authorized driver of a vehicle. The driver monitoring unit (DMU) is configured to monitor a driver profile in a real-time.

In accordance with an embodiment of the present invention, the DMU includes a plurality of sensors and cameras to continuously monitor the driver profile to provide a plurality of driver profile information, which is stored in the storage unit. The plurality of driver profile information includes a driver identification information, a current driving pattern, a historical driving pattern, and others.

In accordance with an embodiment of the present invention, the control unit is configured to allow the authorized driver to crank the vehicle when the alcohol content in the breath of the authorized driver is within a predefined threshold limit of the alcohol content, assess the plurality of drive profile information received from the storage unit, the breath analyzer, and the DMU, and adjust dynamically the predefined threshold limit of the alcohol content required to crank the vehicle based on the assessment, when an unsafe driving pattern is detected.

In accordance with an embodiment of the present invention, the control unit is anyone or a combination of a vehicle control unit (VCU), a vehicle management unit (VMU), a motor control unit (MCU), and an engine control unit (ECU).

In accordance with an embodiment of the present invention, the control unit assesses the current driving pattern after cranking the vehicle for a predefined span that is any one or a combination of a predefined span of distance and a predefined span of time.

In an embodiment of the present invention, the assessment by the control unit includes the comparison of the stored historical driving pattern and the monitored current driving pattern to automatically adjust the predefined threshold limit of the alcohol content, when the unsafe current driving pattern is detected. Further, the control unit assesses and dynamically reduces the predefined threshold limit of the alcohol content that is required to crank the vehicle when the repeated borderline alcohol contents are detected.

In accordance with an embodiment of the present invention, the current driving pattern and the stored historical driving pattern include an eye movement, a head movement, a steering controlling pattern, a voice pattern, a lane changing pattern, a braking pattern, an acceleration and a deceleration pattern, and others.

In addition, the control unit provides an alert signal to the driver when the monitored current driving pattern is unsafe, including visual, auditory, or haptic alert signal.

According to another embodiment of the present invention, the method to control a vehicle in real-time comprises multiple steps. In the first step, the driver identification unit identify an authorized driver and in the second step, a breath analyzer measures an alcohol content in the sample of the authorized driver of a vehicle. In the next step, a driver monitoring unit (DMU) is configured for monitoring a driver profile in real-time. The DMU includes a plurality of sensors and cameras to continuously monitor the driver profile to provide a plurality of driver profile information, which is stored in a storage unit. In another step, a control unit allows the driver to crank the vehicle when the alcohol content in the breath of the authorized driver is within a predefined threshold limit of the alcohol content.

In accordance with an embodiment of the present invention, in the next step, the control unit assesses the plurality of drive profile information received from the storage unit, the breath analyzer, and the DMU. In the last step, the control unit, adjusting dynamically the predefined threshold limit of the alcohol content required to crank the vehicle based on the assessment, when an unsafe driving pattern is detected.

These and other aspects herein will be better appreciated and understood when considered in conjunction with the following description and the accompanying drawing.

It should be understood, however, that the following descriptions are given by way of illustration and not of limitation. Many changes and modifications may be made within the scope of the invention herein without departing from the spirit thereof. The foregoing objectives are attained by employing the real-time vehicle controlling system and the method there of for dynamically adjusting the predefined threshold limit of the alcohol content required to crank the vehicle based on the assessment, when the unsafe driving pattern is detected.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
FIG. 1 illustrates a real-time vehicle controlling system 100, according to an embodiment of a present invention;
Fig. 2 is a flowchart illustrating a method 200 for automatically adjusting a predefined threshold limit of an alcohol content, according to an exemplary embodiment of the present invention;
Fig. 3 is a flow chart illustrating a real-time vehicle controlling method 300, according to another embodiment of the present invention; and
Fig. 4 is a schematic diagram showing a number of functional modules of a processor 110, according to another exemplary embodiment of the present invention.

It should be noted that the accompanying figure is intended to present illustrations of a few examples of the present disclosure. The figure is not intended to limit the scope of the present disclosure. It should also be noted that the accompanying figure is not necessarily drawn to scale.

### DETAILED DESCRIPTION

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of elements or steps but not the exclusion of any other element or step or group of elements or steps.

The term "including" is used to mean "including but not limited to". "Including" and "including but not limited to" are used interchangeably. The accompanying drawing is used to help easily understand various technical features and it should be understood that the alternatives presented herein are not limited by the accompanying drawing. As such, the present disclosure should be construed to extend to any alterations, equivalents and substitutes in addition to those which are particularly set out in the accompanying drawing. Although the terms first, second, etc. may be used herein to describe various elements, these elements should not be limited by these terms. These terms are generally only used to distinguish one element from another.

Conditional language used herein, such as, among others, "can," "may," "might," "e.g.," and the like, unless specifically stated otherwise, or otherwise understood within the context as used, is generally intended to convey that certain alternatives include, while other alternatives do not include, certain features, elements and/or steps. Thus, such conditional language is not generally intended to imply that features, elements and/or steps are in any way required for one or more alternatives or that one or more alternatives necessarily include logic for deciding, with or without other input or prompting, whether these features, elements and/or steps are included or are to be performed in any particular alternative. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain alternatives require at least one of X, at least one of Y, or at least one of Z to each be present.

Terms control unit and CU may be used interchangeably for convenience.

Terms controller area network and CAN may be used interchangeably for convenience.

Terms Driver monitoring unit and DMU may be used interchangeably for convenience.

Terms driver and authorized driver may be used interchangeably for convenience.

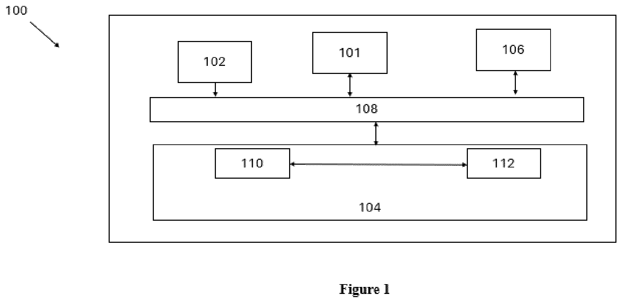

FIG. 1 illustrates a real-time vehicle controlling system 100, according to an embodiment of a present invention. The system 100 includes a deriver identification unit 101, an alcohol detection unit 102, a driver monitoring unit 106, a storage unit 112, and a control unit 104 to perform many tasks.

In accordance with an embodiment of the present invention, the driver identification unit 101 is configured to identify an authorized driver. The driver identification unit 101 uses various technologies to confirm that the driver is authorized to operate the vehicle and may include such as, biometric sensors; key fobs or cards; PIN or password entry; driver profiles etc.

In an advantage, the driver's presence may be determined using techniques like motion detection, occupancy sensing, thermal vision etc. The driver identification unit 101 extracts identification features of the driver, once it is ascertained that the driver is present within the vehicle. Identification features extracted may include, but not limited to facial scan, retinal scan, thermal signatures, fingerprint scan etc. In another example, the driver's/user's picture may be taken by the driver identification unit 101. The identification features extracted may be then compared with a database of drivers stored within the storage unit 112. On a successful match, the driver identity is then shared with the control unit 104 for further processing.

In accordance with an embodiment of the present invention, the alcohol detection unit 102 is configured to receive a sample from a driver and measure an alcohol content in the sample of the authorized driver of a vehicle.

In accordance with another embodiment of the present invention, the alcohol detection unit 102 is triggered by the CU 104 to perform the alcohol content test. Further, the alcohol detection unit102 is designed to measure the alcohol content in a driver's sample. In addition, the sample of the authorized driver is any one or a combination of a breath sample, a blood sample, a saliva sample, a voice sample and eye-related samples. It analyzes the amount of alcohol content present in the sample, which may correlate with the blood alcohol concentration. The alcohol detection unit 102 utilizes advanced technology such as infrared spectroscopy or electrochemical sensors to provide precise readings. Further, the calibration procedures ensure the reliability and accuracy of the alcohol detection unit 102 before each use, thereby optimizing its performance in detecting alcohol contents. In addition, the alcohol detection unit 102 may be of any type such as; Breathalyzers; Chemical Test Strips, Continuous Alcohol Monitoring devices, Blood Alcohol Content (BAC) Sensors, Electronic Nose (E-Nose) etc.

In accordance with an embodiment of the present invention, the driver monitoring unit (DMU) 106 is configured to monitor a driver profile in a real-time.

In accordance with an embodiment of the present invention, the DMU 106 includes a plurality of sensors and cameras to continuously monitor the driving pattern of the authorized driver. In one embodiment, the DMU's 106 sensors continuously monitor and record the driver's behavior and vehicle dynamics over a predefined span in the real-time to detect any deviations from normal driving patterns that may suggest impairment in a current driving pattern.

In accordance with an embodiment of the present invention, the storage unit 112 is configured to store a plurality of driver profile information from the monitored driver profile. Further, the plurality of driver profile information includes a current driving pattern, a historical driving pattern, and others.

In an additional advantage, the DMU 106 may determine a driver state utilizing driver's eye gaze, facial expressions and head movement. Various driver states that may be determined by the DMU 106 are fatigue, sleepiness, anger, happy, jolly, sad, neutral, etc. Hence, the DMU 106 is capable of determining multiple driver states.

In accordance with an embodiment of the present invention, the control unit 104 is configured to allow the driver to start the vehicle when the alcohol content in the breath of the driver is within a predefined threshold limit of the alcohol content. Further, the control unit 104 assesses the plurality of drive profile information received from the storage unit 112, the breath analyzer 102, and the DMU 106. The control unit 104 dynamically adjusts the predefined threshold limit of the alcohol content required to crank the vehicle based on the assessment, when an unsafe driving pattern is detected.

In accordance with an embodiment of the present invention, the control unit 104 assesses the current driving pattern after cranking the vehicle for the predefined span that is any one or a combination of a predefined span of distance and a predefined span of time.

In accordance with an embodiment of the present invention, the assessment by the control unit 104 includes the comparison of the stored historical driving pattern and the monitored current driving pattern to automatically adjust the predefined threshold limit of the alcohol content, when the unsafe current driving pattern is detected.

In accordance with an embodiment of the present invention, the current driving pattern and the stored historical driving pattern include an eye movement, a head movement, a steering controlling pattern, a voice pattern, a lane changing pattern, a braking pattern, an acceleration and a deceleration pattern, and others.

In accordance with an embodiment of the present invention, the control unit 104 further assesses and dynamically reduces the predefined threshold limit of the alcohol content that is required to crank the vehicle when the repeated borderline alcohol contents are detected.

In accordance with an embodiment of the present invention, the control unit 104 provides an alert signal to the driver when the monitored current driving pattern is unsafe, including visual, auditory, or haptic alert signal.

In accordance with another embodiment of the present invention, the control unit 104 is anyone or a combination of a vehicle control unit (VCU), a vehicle management unit (VMU), a motor control unit (MCU), and an engine control unit (ECU).

Furthermore, the term related to the control unit 104 such as "controller", "control apparatus", "control device", "control module", or "server", etc. refers to a hardware device including the storage unit 112 and a processor 110 configured to execute one or more steps interpreted as an algorithm structure. The storage unit 112 includes a memory that stores algorithm steps and the processor 110 executes the algorithm steps to perform one or more processes of the system 100 and method 300 in accordance with various exemplary embodiments of the present disclosure.

The control unit 104 according to exemplary embodiments of the present disclosure may be implemented through a nonvolatile memory configured to store algorithms for controlling the operation of various components of the vehicle or data about software commands for executing the algorithms, and the processor 110 configured to perform operation to be described above using the data stored in the storage unit 112. The storage unit 112 and the processor 110 may be individual chips.

Alternatively, the storage unit 112 and the processor 110 may be integrated in a single chip. The processor 110 may be implemented as one or more processors. The processor 110 may include various logic circuits and operation circuits, may process data according to a program provided from the storage unit 112, and may generate a control signal according to the processing result.

The control unit 104 may be at least one microprocessor operated by a predetermined program which may include a series of commands for carrying out the system 100 and method 300 included in the aforementioned various exemplary embodiments of the present disclosure.

The aforementioned invention may also be embodied as computer-readable code or a set of instructions on a computer-readable recording medium. The computer-readable recording medium is a data storage device that can store data which may be thereafter read by a computer system and store and execute program instructions which may be thereafter read by the computer system.

Examples of the computer-readable recording medium include Hard Disk Drive (HDD), solid state disk (SSD), silicon disk drive (SDD), read-only memory (ROM), random-access memory (RAM), flash memory, CD-ROMs, magnetic tapes, floppy discs, optical data storage devices, etc and implementation as carrier waves (e.g., transmission over the Internet). Examples of the program instruction include machine language code such as those generated by a compiler, as well as high-level language code which may be executed by a computer using an interpreter or the like.

In various exemplary embodiments of the present disclosure, each operation described above may be performed by the control unit 104, and the control unit 104 may be configured by a plurality of control unit, or an integrated single control unit.

In various exemplary embodiments of the present disclosure, the control unit 104 may be implemented in a form of hardware or software, or may be implemented in a combination of hardware and software.

In various exemplary embodiments of the present disclosure, each control unit 104 includes one or more controllers, actuators, sensors, and/or other components that control the operation, handling, and other characteristics of the vehicle.

In various exemplary embodiments of the present disclosure, the control unit 104 may also include one or more input/output ("I/O") ports (e.g., serial ports, (e.g., RS233 port, USB, etc.) (not shown) and one or more network interfaces. The I/O port or ports may be operable to communicate with input/output devices, such as an internal and/or external display, keypad, mouse, pointing device, control panel, touch screen display, another computer-based device, printer, remote control, microphone, speaker, etc., which facilitates user interaction with the control unit 104.

Furthermore, the terms such as "unit", "module", etc. included in the specification mean units for processing at least one function or operation, which may be implemented by hardware, software, or a combination thereof.

In one embodiment, the control unit 104 interfaces with the controller area networks (CAN) 108, for transmission of command and control signals from the control unit 104 various electronics and electrical systems within the vehicle. Through its comprehensive control capabilities, the CU 104 optimizes the vehicle's overall efficiency, safety, and adaptability across diverse operating scenarios and driving conditions.

In accordance with another exemplary alternative embodiment of the present invention, the vehicle is generally equipped with the IoT which may or may not be integrated with the Control Unit 104.

In another alternative embodiment, the IoT is internally connected with a GPS (Global Positioning System) and network modules, allowing it to send notifications to a user device of either the driver or their relatives to warn them that the driver is overdrunk because their alcohol content is above than the predefined limit of the alcohol content.

In accordance with an exemplary embodiment of the present invention, the user device is any one or a combination of a desktop computer, a laptop computer, a user computer, a tablet computer, a personal digital assistant (PDA), a cellular telephone, a communication unit appliance, a camera, a smartphone, an enhanced general packet radio service (EGPRS) mobile phone, a media player, a navigation device, an email device.

Furthermore, the user device may be provided access to and/or receive application software executed and/or stored on any of the remote server.

In some examples, the user device performs functions of a social communication unit (not shown) to the cloud server. In some implementations, the user device may communicate wirelessly through the communication unit that is the part of the controller area network (CAN) 108, which may include digital signal processing circuitry where necessary.

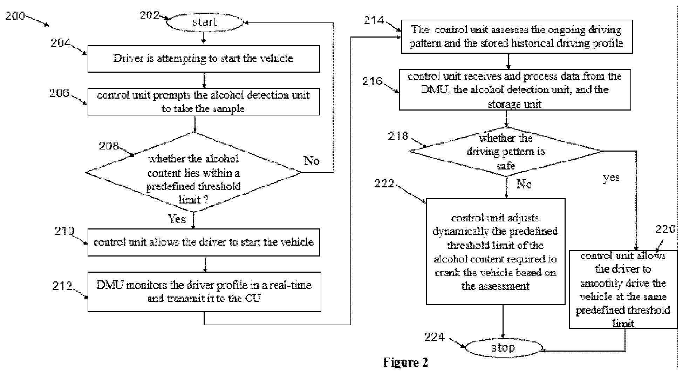

Fig. 2 is a flowchart illustrating a method 200 for automatically adjusting the predefined threshold limit of the alcohol content, according to an exemplary embodiment of the present invention. Flowchart 200 starts at step 202, and proceeds to step 204, 206, 208, 210, 212, 214, 216, 218, 220, 222 and 224.

The method is first operative at step 202.

At step 204, the driver is attempting to start the vehicle.

At step 206, the control unit 104 prompts the breath analyzer 102 to collect the breath sample when the driver attempts to start the vehicle. The control unit 104 starts analyzing the alcohol content in the breath sample against the predefined limit of the alcohol content.

At step 208, a determination is made whether the measured alcohol content is within the predefined threshold limit, as set by safety regulations or user-defined parameters, when the determination is "YES", then the flowchart 200 proceeds to step 210 otherwise the flowchart 200 proceeds to step 202.

At step 210, the control unit 104 allows the driver to start the vehicle.

At step 212, the DMU 106 monitors the driver profile in the real-time and transmits it to the CU 104.

At step 214, the control unit 104 assesses the ongoing driving pattern and the stored historical driving profile.

At step 216, the control unit 104 continuously receives and processes data from the DMU 106, the breath analyzer 102, and the storage unit 112. This real-time assessment helps in identifying any changes or irregularities in driving patterns.

At step 218, another determination is made whether the driving pattern is safe, when the determination is "YES", then the flowchart 200 proceeds to step 220 otherwise the flowchart 200 proceeds to step 222. Further, the control unit 104 proactively intervenes if the unsafe diving pattern is detected.

At step 220, the control unit 104 allows the driver to smoothly drive the vehicle at the same set predefined threshold limit of the alcohol content.

At step 222, the control unit 104 dynamically adjusts the predefined threshold limit of the alcohol content required to crank the vehicle based on the assessment. These actions are designed to prevent potential accidents and enhance overall road safety.

At step 224, the method is terminated.

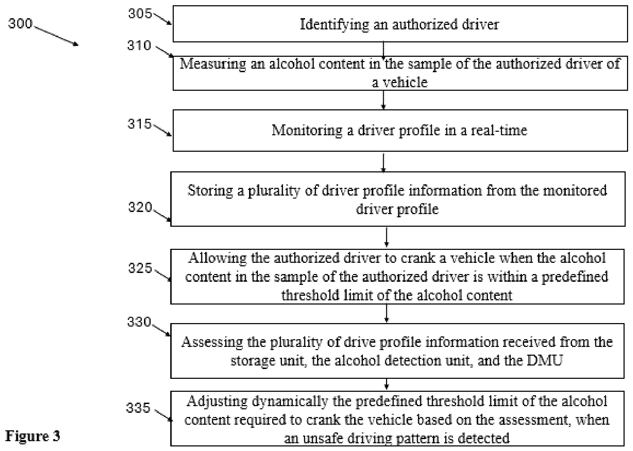

Fig. 3 is a flow chart illustrating a real-time vehicle controlling method 300, according to another embodiment of the present invention. The method 300 includes a driver identification unit 101, an alcohol detection unit 102, a driver monitoring unit (DMU) 106, a storage unit 112, and a control unit 104 to perform multiple steps. The method 300 starts at step 305 and proceeds to steps 310, 315, 320, 325, 330 and 335.

The method 300 is first operative at step 305 in which the driver identification unit 101 is configured to identify an authorized driver.

At step 310, the alcohol detection unit 102 is configured to measure an alcohol content in a sample of the authorized driver of a vehicle. In an example, the sample of the authorized driver is any one or a combination of a breath sample, a blood sample, a saliva sample, a voice sample and eye-related samples.

At step 315, the driver monitoring unit (DMU) 106 is configured to monitor a driver profile in a real-time. The DMU 106 includes a plurality of sensors and cameras to continuously monitor the driver profile to provide a plurality of driver profile information. Further, the plurality of driver profile information includes a current driving pattern, a historical driving pattern, and others.

In accordance with an embodiment of the present invention, the current driving pattern and the stored historical driving pattern include an eye movement, a head movement, a steering controlling pattern, a voice pattern, a lane changing pattern, a braking pattern, an acceleration and a deceleration pattern, and others

At step 320, the storage unit 112 stores the plurality of driver profile information from the monitored driver profile.

At step 325, the control unit 104 further allows the driver to crank the vehicle when the alcohol content in the sample of the authorized driver is within a predefined threshold limit of the alcohol content.

At step 330, the control unit 104 assesses the plurality of drive profile information received from the storage unit 112, the alcohol detection unit 102, and the DMU 106.

In one embodiment, the control unit 104 assesses the current driving pattern after cranking the vehicle for a predefined span that is any one or a combination of a predefined span of distance and a predefined span of time. Further, the assessment by the control unit 104 includes the comparison of the stored historical driving pattern and the monitored current driving pattern.

At step 335, the control unit 104 dynamically adjusts the predefined threshold limit of the alcohol content required to crank the vehicle based on the assessment, when an unsafe driving pattern is detected.

In one embodiment, the control unit 104 further assesses and dynamically reduces the predefined threshold limit of the alcohol content that is required to crank the vehicle when the repeated borderline alcohol contents are detected.

In accordance with an embodiment of the present invention, the control unit 104 is anyone or a combination of a vehicle control unit (VCU), a vehicle management unit (VMU), a motor control unit (MCU), and an engine control unit (ECU). Further, the control unit 104 provides an alert signal to the driver when the monitored current driving pattern is unsafe, including visual, auditory, or haptic alert signal.

In accordance with another embodiment of the present invention, a vehicle ignition needs to be on before measurement of the alcohol content in the sample of the driver via the alcohol detection unit 102.

In accordance with an alternative embodiment of the present invention, the method 300 is further configured to periodically check the driver's alcohol content whenever the unsafe driving pattern is detected during a trip, ensuring continuous compliance with the predefined alcohol content limit.

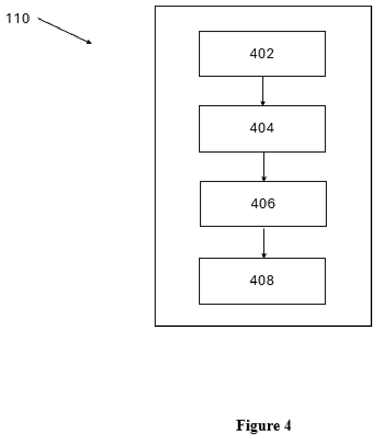

Fig. 4 is a schematic diagram showing a number of functional modules of a processor 110, according to another exemplary embodiment of the present invention. The number of functional modules comprises, a receiving module 402, a driving pattern detection module 404, a response module 406, and a warning module 408.

In general, each functional module 402-408 can be implemented either in hardware or software. Ideally, the control unit 104 includes the processor 110 which has the number of functional modules 402-408, potentially in collaboration with the communications interface (now shown in the figure) and/or the storage unit 112, may implement one or more functions, as described herein.

In an embodiment, the receiving module 402, configured to receive data from the alcohol detection unit 102 and the DMU 106.

In an embodiment, the driving pattern detection module 404 is configured to correlate the real-time data from the DMU 106 and the alcohol detection unit 102. If the analysis indicates an erratic driving pattern consistent with impairment or if subsequent samples reveal an increase in the alcohol content above the predefined threshold limit, the control unit 104 initiates proactive measures.

In other embodiment, the response module 406 dynamically adjusts the predefined threshold limit of the alcohol content required to crank the vehicle based on the above assessment, when the unsafe driving pattern is detected. Lastly, the warning module 408 is configured to alert the driver by providing the alert signal.

In an advantageous embodiment, the present system 100 implements the alcohol detection unit 102 within the vehicle to measure the driver's alcohol content in real-time and continuous monitoring of the driver's condition to control a parameter for vehicle operation to improve the road safety. Further, the system 100 is designed to dynamically adjust the predefined threshold limit for alcohol content based on real-time assessments of the driver's current and historical driving patterns.

In another advantageous embodiment, the system 100 provides a warning alert when unsafe driving patterns are detected, thereby promoting safer driving behavior even after the vehicle has been cranked.

In another advantageous embodiment, the present system 100 is aligning with the goal of providing a practical solution for vehicle and driver safety by integrating both alcohol content measurement and driving pattern monitoring, proactively preventing potential accidents and ensuring compliance with safe driving practices.

In accordance with another advantageous embodiment, the invention is specifically designed to meet rigorous regulatory safety standards that govern vehicle operation and prevent impaired driving.

For an example, the control unit 104 has already set the threshold alcohol limit at 20% to crank the vehicle, and the driver always maintains the alcohol content in his/her breath sample below 20%. In this case, the system 100 assesses the repetition pattern of the driver. If it is more than for example 5 times in 5 days, then it automatically reduces the threshold alcohol limit to 15% to crank the vehicle. In this way, the driver cannot cheat the system 100 in any manner.

In another example, the system 100 adjusts the threshold alcohol limit in a driver-specific manner. In this way, it does not provide any general solution and adjusts the vehicle operation parameter as per the driver identification. For example, driver 'A' is trying to cheat the system 100 by repeatedly maintaining his/her breath alcohol content below the threshold alcohol limit to crank the vehicle. Simultaneously, driver 'B' occasionally has alcohol, then, in this case, the system will reduce the threshold alcohol limit for the driver 'A' not for `driver B'.

While the detailed description has shown, described, and pointed out novel features as applied to various alternatives, it can be understood that various omissions, substitutions, and changes in the form and details of the devices or algorithms illustrated can be made without departing from the scope of the disclosure. As can be recognized, certain alternatives described herein can be embodied within a form that does not provide all of the features and benefits set forth herein, as some features can be used or practiced separately from others.

The disclosures and the description herein are intended to be illustrative and are not in any sense limiting the invention, defined in scope by the following claims.

### ELEMENT LIST

| **COMPONENT** | **REFERENCE NUMBER** |
|---|---|
| System | 100 |
| Driver identification unit | 101 |
| Alcohol detection unit | 102 |
| Control unit (CU) | 104 |
| Driver Monitoring Unit (DMU) | 106 |
| Controller Area Network | 108 |
| Processor | 110 |
| Storage unit | 112 |
| Receiving module | 402 |
| Driving pattern detecting module | 404 |
| Response module | 406 |
| Warning module | 408 |

## Claims

1. A real-time vehicle controlling system, comprising:
a driver identification unit 101 configured to identify an authorized driver;
an alcohol detection unit 102 configured to measure an alcohol content in a sampleof the authorized driver of a vehicle;
a driver monitoring unit (DMU) 106 configured to monitor a driver profile in a real-time;
a storage unit 112, configured to store a plurality of driver profile information from the monitored driver profile; and
a control unit 104 configured to:
allow the authorized driver to crank the vehicle when the alcohol content in the sample of the authorized driver is within a predefined threshold limit of the alcohol content;
assess the plurality of drive profile information received from the storage unit 112, the alcohol detection unit 102, and the DMU 106; and
adjust dynamically the predefined threshold limit of the alcohol content required to crank the vehicle based on the assessment, when an unsafe driving pattern is detected.

2. The system 100 as claimed in claim 1, wherein the control unit 104 is anyone or a combination of a vehicle control unit (VCU), a vehicle management unit (VMU), a motor control unit (MCU), and an engine control unit (ECU).

3. The system 100 as claimed in claim 1, wherein the plurality of driver profile information includes a current driving pattern, a historical driving pattern, and others.

4. The system 100 as claimed in claims 1&3, wherein the control unit 104 assesses the current driving pattern after cranking the vehicle for a predefined span that is any one or a combination of a predefined span of distance and a predefined span of time.

5. The system 100 as claimed in claims 1 &4, wherein the assessment by the control unit 104 includes the comparison of the stored historical driving pattern and the monitored current driving pattern to automatically adjust the predefined threshold limit of the alcohol content, when the unsafe current driving pattern is detected.

6. The system 100 as claimed in claims 1&5, wherein the control unit 104 further assesses and dynamically reduces the predefined threshold limit of the alcohol content that is required to crank the vehicle when the repeated borderline alcohol contents are detected.

7. The system 100 as claimed in claim 1, wherein the DMU 106 includes a plurality of sensors and a plurality of cameras to monitor the driver's profile.

8. The system 100 as claimed in claim 1, wherein the current driving pattern and the stored historical driving pattern include an eye movement, a head movement, a steering controlling pattern, a voice pattern, a lane changing pattern, a braking pattern, an acceleration and a deceleration pattern, and others.

9. The system 100 as claimed in claim 1, wherein the control unit 104 provides an alert signal to the driver when the monitored current driving pattern is unsafe, including visual, auditory, or haptic alert signal.

10. The system as claimed in claim 1, wherein the sample of the authorized driver is any one or a combination of a breath sample, a blood sample, a saliva sample, a voice sample and eye-related samples.

11. A real-time vehicle controlling method, comprising:
identifying, by a driver identification unit 101, an authorized driver;
measuring, by an alcohol detection unit 102, an alcohol content in a sample of the authorized driver of a vehicle;
monitoring, by a driver monitoring unit (DMU) 106, a driver profile in a real-time;
storing, by a storage unit 112, a plurality of driver profile information from the monitored driver profile;
allowing, by a control unit 104, the authorized driver to crank the vehicle when the alcohol content in the sample of the driver is within a predefined threshold limit of the alcohol content;
assessing, by the control unit 104, the plurality of drive profile information received from the storage unit 112, the alcohol detection unit 102, and the DMU 106; and
adjusting, by the control unit 104, dynamically the predefined threshold limit of the alcohol content required to crank the vehicle based on the assessment, when an unsafe driving pattern is detected.
